# EUROPEAN PATENT SPECIFICATION

(11) **EP 1 875 537 B1**
(45) Date of publication and mention of the grant of the patent: **04.09.2019**
(21) Application number: 06732770.0
(22) Date of filing: 31.03.2006
(51) Int. Cl.: H01M 4/58, C01G 45/00, C01G 45/12, C01G 51/00, C01G 53/00, H01M 4/485, H01M 4/505, H01M 4/525

(54) **METHOD FOR PREPARING LAYERED CORE-SHELL CATHODE ACTIVE MATERIALS FOR LITHIUM SECONDARY BATTERIES**
VERFAHREN ZUR HERSTELLUNG GESCHICHTETE KERN-MANTEL-KATHODENAKTIVMATERIALIEN FÜR LITHIUM-SEKUNDÄRBATTERIEN
PROCEDE DE PREPARATION DE MATERIAUX ACTIFS STRATIFIES POUR CATHODE POUR PILES SECONDAIRES AU LITHIUM COMPRENANT UNE STRUCTURE NOYAU-COQUE

(30) Priority: 01.04.2005 KR 20050027683
(43) Date of publication of application: 09.01.2008
(73) Proprietor: SK Innovation Co., Ltd., Seoul 110-110 (KR)
(72) Inventor: SUN, Yang Kook 104-1603, Daechi Hyundai Apt., 974, Seoul 135-280 (KR); LEE, Doo Kyun 7-409, Jamsil Jangmi Apt., Seoul 138-240 (KR); PARK, Sang Ho 301, Yeonggwang Villa, 193-13, Seoul 156-090 (KR)
(74) Representative: Comoglio, Elena
(86) International application number: PCT/KR2006/001201
(87) International publication number: WO 2006/104367

(56) References cited:
- JP-A- 2000 195 513
- JP-A- 2001 148 249
- JP-A- 2004 227 790
- KR-A- 20010 047 852
- US-A1- 2002 110 736
- US-A1- 2002 182 502
- US-A1- 2003 124 422
- US-A1- 2003 180 615
- US-A1- 2004 091 779
- US-B2- 6 692 865
- B. J. HWANG, R. SANTHANAM,C. P. HUANG, Y. W. TSAI AND J. F. LEE: "LiMn2O4 Core Surrounded by LiCoxMn2-xO4 Shell Material for Rechargeable Lithium Batteries", JOURNAL OF THE ELECTROCHEMICAL SOCIETY, vol. 149, no. 6, 1 June 2002 (2002-06-01), pages A694-A698, XP002633229,
- XIANG MING HE ET AL: "Preparation of spherical spinel LiMn2O4 cathode material for lithium ion batteries", JOURNAL OF SOLID STATE ELECTROCHEMISTRY ; CURRENT RESEARCH AND DEVELOPMENT IN SCIENCE AND TECHNOLOGY, SPRINGER, BERLIN, DE, vol. 9, no. 6, 1 June 2005 (2005-06-01), pages 438-444, XP019352602, ISSN: 1433-0768, DOI: 10.1007/S10008-004-0593-Y

## Description

### Technical Field

The present invention relates, in general, to secondary lithium batteries and, more particularly, to a layered core-shell cathode active material for secondary lithium batteries.

### Background Art

Since their commercialization by Sony Corporation in 1991, lithium ion secondary batteries have been used as mobile power sources in a broad spectrum of portable electric appliances. With recent great advances in the electronic, communication, and computer industries, high performance electronic and communication products, such as mobile phones, camcorders, laptop PCs, etc., have been developed, partly on the basis of lithium ion secondary batteries being available as power sources therefor. In advanced countries, such as America, Japan, and European countries, furthermore, active research has been conducted into power sources for hybrid automobiles, in which internal combustion engines are combined with lithium ion secondary batteries, particularly secondary lithium ion batteries, having a high enough energy density to be applicable to electric automobiles.

Readily commercially available, small lithium ion secondary batteries employ LiCoO₂ as a cathode and carbon as an anode. LiCoO₂ shows stable charge and discharge characteristics, excellent electron conductivity, high stability, and flat discharge voltage characteristics, but the cobalt component is expensive because deposits thereof are few, and it is hazardous to the body. Thus, alternative materials are now required for the cathode of lithium ion secondary batteries. LiNiO₂, LiCoₓNi₁₋ₓO₂, and LiMn₂O₄ are now under extensive study as cathode materials of lithium ion secondary batteries. LiNiO₂ cannot be commercialized at present due to its difficulty in being stoichiometrically synthesized as well as its low thermal stability, although it has the same layered structure as LiCoO₂. LiMn₂O₄ incurs a low cost in the production thereof and is environmentally friendly, but shows poor lifetime characteristics due to the structural phase transition Jahn-Teller distortion, and Mn dissolution, both attributable to Mn³⁺. Particularly, the Mn dissolution, resulting from the reaction of Mn with electrolytes, causes a great decrease in lifetime at high temperatures, acting as a hindrance to the commercialization of the rechargeable lithium ion battery.

Japanese Pat. Laid-Open Publication No. 2004-227790 discloses a lithium transition metal complex oxide having a spinel structure, produced as an active cathode material for secondary lithium ion batteries through sodium hydrogen carbonate coprecipitation, which shows a heat generation starting temperature of 220° C or higher and excellent cell characteristics even under poor circumstances. Also, Japanese Pat Laid-Open Publication No. 2004-241242 discloses a lithium transition metal complex oxide having a spinel structure, produced as an active cathode material for secondary lithium ion batteries through sodium hydrogen coprecipitation, comprising a first and a second particle component, which are 1 to 50 µm and 8 to 50 µm, respectively. Japanese Pat. Laid-Open Publication No. 2001-148249 discloses a spinel-type lithium manganese complex oxide having 5V capacity, represented by LiNi_{0.5}Mn_{1.5}O₄, for cathode material, which is prepared using ammonium carbonate and shows high energy density and a superior life cycle even at high temperatures. US 2002/182502 discloses an alternative method for preparing lithium manganese complex oxide with a spinel structure by heat treatment.

Conventional manganese carbonates, as described above, can be prepared using carbonate coprecipitation. However, crystals of the manganese carbonates thus obtained are not spherical, but are irregular in shape, with a broad particle distribution. Such irregularly shaped manganese carbonates with a broad particle distribution have poor packing density and have a large specific surface in contact with the electrolytes, so that they dissolve in the electrolytes. Therefore, a higher packing density and a lower specific surface can be achieved with spheric monodispersed manganese carbonates. Spinel-type LiMn₂O₄ active materials, which have a constant shape, can be prepared with the spheric manganese carbonate serving as a starting material.

### Description of Drawings

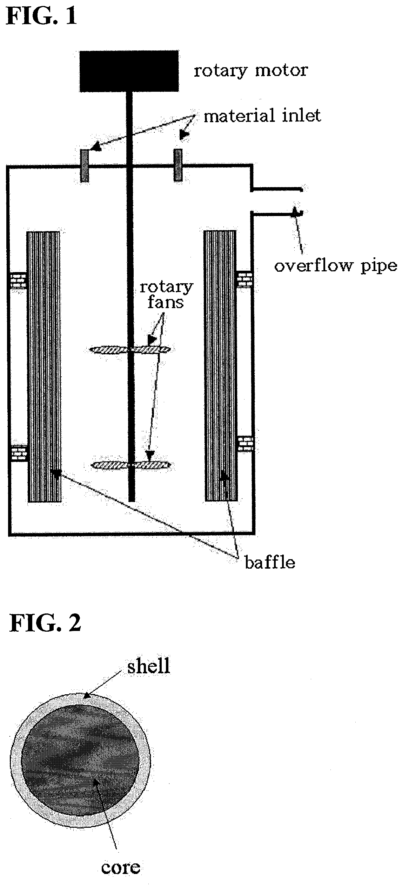

FIG. 1 is a schematic cross sectional view showing a reactor used in the present invention;
FIG. 2 is a schematic cross sectional view showing a bilayer core-shell structure prepared in accordance with the present invention;
FIG. 3 is an FE-SEM photograph showing a cross section of the layered core-shell cathode active material prepared in Example 1;
FIG. 4 is an FE-SEM photograph showing the surface morphology of the layered core-shell cathode active material prepared in Example 1;
FIG. 5 is an XRD diffractogram of the layered core-shell cathode active material prepared in Example 1;
FIG. 6 is an XRD diffractogram of the layered core-shell cathode active material prepared in Example 1, in which the preparation time period is set as a parameter;
FIG. 7 is a graph in which the discharge capacity of the layered core-shell cathode active material was plotted against lifetime at 30°C depending on the time period during which the core of the bilayer core/shell structure prepared in Example 1 was coated with the shell; and
FIG. 8 is a graph in which the discharge capacity of the layered core-shell cathode active material was plotted against lifetime at 60°C according to the time period for which the core of the bilayer core/shell structure prepared in Example 1 was coated with the shell.

### Disclosure

### Technical Problem

Therefore, the present invention has been made keeping in mind the above problems occurring in the cathode active materials, prepared through solid phase and wetting methods, for secondary lithium ion batteries, and it is an object of the present invention to provide a layered core-shell cathode active material for secondary lithium batteries, which employs spheric monodispersed active particles and show a high packing density and superior lifetime characteristics.

### Technical Solution

Leading to the present invention, intensive and thorough research into active cathode materials for secondary lithium ion batteries, conducted by the present inventors, resulted in the finding that a multilayer structure comprising a spinel-type manganese cathode as a core and a spinel-type transition metal mix-based cathode as a shell is greatly improved with respect to capacity and packing density as well as lifetime and thermal stability.

### Advantageous Effects

The bilayer core-shell cathode active material prepared according to the present invention is spherical and has a spinel structure. In the bilayer core-shell cathode active material, the inner part realizes the high capacity while the outer part is thermally stable, so that the electrode made from the active material is greatly improved with respect to capacity and lifetime.

### Best Mode

A spheric cathode active material for secondary lithium batteries, comprising a multilayer core-shell structure having a structural formula of: Li₁₊ₐ[(MxMn₁₋ₓ)_{1-z}(M'_{y}Mn_{1-y})_{z}]₂O₄ (M is selected from a group consisting of Ni, Co, Mg, Zn, Ca, Sr, Cu, Zr, P, Fe, Al, Ga, In, Cr, Ge, Sn and combinations thereof, M' is selected from a group consisting of Ni, Mg, Cu, Zn and combinations thereof, M' is different from M, 0.01≤x≤0.25, 0.01≤y≤=0.5, 0.01≤z≤0.5, and O≤a≤O.1) is provided. In a modification of this aspect, the multilayer core-shell structure comprises a core having a structural formula of Li₁₊₃[MₓMn₁₋ₓ]₂O₄ (M is selected from a group consisting of Ni, Co, Mg, Zn, Ca, Sr, Cu, Zr, P, Fe, Al, Ga, In, Cr, Ge, Sn and combinations thereof, 0.01≤x≤0.25, O≤a≤O.1) and a shell having a structural formula of Li₁₊ₐ[M'_{y}Mn_{1-y}]₂O₄ (M' is selected from a group consisting of Ni, Mg, Cu, Zn and combinations, 0.01≤y≤0.5, O≤a≤O.1).

In another modification, the multilayer core-shell structure has a structural formula of Li₁₊ₐ[MₓMn₁₋ₓ]_{1-z}(M_{y}Mn_{1-y})_{z}]₂O_{4-b}P_{b} (P is F or S, 0.1≤b≤0.2).

In a preferred modification of the aspect, the shell is as thick as 3 to 50% of the total diameter of the cathode active material.

In another preferred modification of the aspect, the active material ranges in diameter from 1 to 50 µm.

In accordance with another aspect, an electrode employing the cathode active material is provided for secondary lithium batteries.

Also, in accordance with a further aspect, a secondary lithium battery employing the electrode is provided.

In accordance with still a further aspect, a method is provided for preparing a spherical cathode active material for secondary lithium batteries comprising a multilayer core-shell structure having a structural formula of: Li₁₊ₐ[(MₓMn₁₋ₓ)_{1-z}(M'_{y}Mn_{1-y})_{z}]₂O₄ (M is a metal selected from a group consisting of Ni, Co, Mg, Zn, Ca, Sr, Cu, Zr, P, Fe, Al, Ga, In, Cr, Ge, Sn and combinations thereof, M' is a metal selected from a group consisting of Ni, Mg, Cu, Zn and combinations thereof, M' is different from M, 0.01≤x≤0.25, 0.01≤y≤0.5, 0.01≤z≤0.5, and 0≤a≤ 0.1), which is characterised in that the method comprises:
a) mixing and stirring distilled water and a hydrazine (H₂NNH₂) solution in a reactor, feeding a metal salt solution containing a Mn salt and a salt of a metal, selected from a group consisting of Ni, Co, Mg, Zn, Ca, Sr, Cu, Zr, P, Fe, Al, Ga, In, Cr, Ge, Sn and combinations thereof, and an aqueous ammonia solution into the reactor, and adding a mixture of a carbonate solution and a hydrazine solution to the reactor, so as to cause a reaction;
b) ceasing the supply of Mg and Mn, and feeding a metal salt solution containing a Mn salt and a salt of a metal selected from a group consisting of Ni, Mg, Cu, Zn and combinations thereof, a carbonate solution and an aqueous ammonia solution into the reactor to cause a reaction for producing a complex transition metal carbonate particle having a composition of [(MₓM₁₋ₓ)_{1-z}((M'_{y}Mn_{1-y})_{z}]CO₃;
c) filtering, washing and drying the complex transition metal carbonate particle to obtain a precursor having a composition of [(MₓM₁₋ₓ)_{1-z}(M'_{y}Mn_{1-y})_{z}]₂O₃; and
d) mixing the precursor with a lithium salt selected from a group consisting of lithium hydroxide (LiOH), lithium carbonate (Li₂CO₃), and lithium nitrate (LiNO₃), and heating to a temperature ranging from 400 to 650°C, maintaining the temperature thereat for a predetermined period of time, grinding and calcining the mixture.

In a modification of the aspect, the metal salt used in steps a) and b) is in the form of a metal sulfate, metal nitrate, or metal phosphate.

In a preferred embodiment, the carbonate salt used in steps a) and b) is selected from a group consisting of ammonium hydrogen carbonate, sodium carbonate, ammonium carbonate, and sodium hydrogen carbonate.

In another preferred embodiment of the aspect, the metal salt solution of step a) contains a salt of a metal selected from a group consisting of Ni, Co, Mg, Zn, Ca, Sr, Cu, Zr, P, Fe, Al, Ga, In, Cr, Ge, Sn and combinations thereof, and a Mn salt in a molar ratio of 0.01∼0.25:0.09∼0.75 and ranges in concentration from 0.5 to 3 M, the aqueous ammonia solution ranges in concentration from 0.1 to 0.8 M, and the aqueous hydrazine (H₂NNH₂) solution is used in an amount from 0.5 to 4 vol% based on the total volume of the distilled water in step a).

In a further preferred embodiment of the aspect, the metal salt solution of step b) contains a Mn salt and a salt of a metal selected from a group consisting of Ni, Mg, Cu, Zn and combinations thereof in a molar ratio of 0.99∼0.5:0.01∼0.5, ranges in concentration from 0.5 to 3M, and is stoichiometrically mixed with a 0.5∼3M carbonate solution and a 0.1∼0.8M aqueous ammonia solution.

The layered core-shell cathode active material for secondary lithium ion batteries can be prepared by calcining, in combination with a lithium salt selected from among lithium hydroxide (LiOH), lithium carbonate (Li₂CO₃) and lithium nitrate (LiNO₃), a spheric bilayer core-shell structure, consisting of [(MₓM₁₋ₓ)_{1-z}(M'_{y}Mn_{1-y})_{z}]CO₃, in which a spheric (MₓMn₁₋ₓ)CO₃ particle prepared in the presence of a reducing agent (hydrazine) is used as a core, with a (M'_{y}Mn_{1-y})CO₃ shell covering the core.

In the present invention, a layered core-shell structure of lithium complex metal oxide is prepared through the following processes.
a) a mixed metal salt, an aqueous hydrazine solution, an aqueous ammonia solution and an alkaline solution are mixed in a reactor to precipitate a spheric complex metal carbonate.
b) a transition metal-based metal precursor, an aqueous ammonia solution and an alkaline solution are reacted in the reactor to deposit a transition metal carbonate on the spheric complex metal carbonate precipitate, thereby affording a core-shell bilayer complex metal carbonate precipitate.
c) the bilayer precipitate is dried or thermally treated to obtain a bilayer complex metal carbonate/oxide.
d) the bilayer complex metal carbonate/oxide is mixed with a lithium precursor.

In step a), a solution of two or more metal salts in water is used. The reaction is conducted for 2 to 12 hours at a pH of 6.5 to 8 while a hydrazine solution serves as a reducing agent. When the reaction is conducted at a pH lower than 6.5, the yield for carbonate coprecipitation decreases. On the other hand, at a high alkaline range exceeding pH 8, carbonate coprecipitation occurs, with the concomitant coprecipitation of hydroxide, leading to a decrease in the purity of the complex metal carbonate of interest.

In order to prepare the spheric manganese carbonate (Mn₁₋ₓMₓ)CO₃, first, a salt of a metal selected from a group consisting of Ni, Co, Mg, Zn, Ca, Sr, Cu, Zr, P, Fe, Al, Ga, In, Cr, Ge, Sn and combinations thereof is dissolved, together with a Mn salt, at a molar ratio of 0.01≤x≤0.25, in distilled water. The metal salt may preferably be in the form of metal sulfate, metal nitrate, or metal phosphate.

The Mn salt solution, the metal salt solution, and the aqueous ammonia solution are mixed together with a hydrazine solution in a reactor. A preferable concentration ranges from 0.5 to 3 M for the metal solution, from 0.1 to 0.8 M for the aqueous ammonia solution, and from 0.05 to 3 M for the carbonate solution. The reducing agent is preferably added to each of the reactor and the NH₄HCO₃ in an amount from 0.5 to 4 vol% based on the volume of the distilled water. In addition to preventing the oxidation of manganese, the aqueous solution of hydrazine functions to increase the crystallinity of the resulting manganese carbonate and allows it to grow in spheric forms.

If the concentration of the metal solution is below 0.5 M, the yield is poor. On the other hand, if the concentration exceeds 3M, metal salts themselves precipitate due to a solubility difference, which makes it impossible to obtain spheric manganese complex carbonates.

If the hydrazine solution is used in an amount less than 0.5 vol% based on the volume of the distilled water, angular platy manganese carbonate grows. On the other hand, more than 4 vol% hydrazine decreases the yield of spheric manganese carbonate. In addition to preventing the oxidation of manganese, the aqueous solution of hydrazine functions to increase the crystallinity of the resulting manganese carbonate and allows it to grow in spheric forms.

As for the aqueous ammonia solution, it is preferably 0.1 to 0.8 M in concentration. The reason why the concentration of the aqueous ammonia solution is set forth above is that ammonia reacts with metal precursors at a 1:1 molar ratio, but is recovered as an intermediate. Furthermore, this concentration condition is optimal for the crystallinity and stability of the cathode active material. Also, the aqueous NH₄HCO₃ solution is added in order to adjust the pH of the solution mixture to within the range from 6.5 to 8. It is preferred that the overall reaction within the reactor be conducted for 2 to 20 hours. The carbonate salt coprecipitates thus produced are controlled to stay for 6 hours on average within the reactor, with the pH maintained in the range from 6.5 to 8. Because the precipitation of manganese carbonate in a complex form at low temperature makes it difficult to yield a high density complex carbonate, the reactor is preferably maintained at 60°C.

The reaction mechanism for the preparation of manganese carbonate in step a) is as follows.

2(Mn₁₋ₓMₓ)²⁺ + N₂H₄ + 40H⁻ → 2(Mn₁₋ₓMₓ) + N₂ + 4H₂0 --------- (1)

(Mn₁₋ₓMₓ)²⁺ + xNH₃²⁺ [(Mn₁₋ₓMₓ)(NH₃)ₙ²⁺](aq.) + (x-n)NH₃²⁺ ---- (2)

[(Mn₁₋ₓMₓ)(NH₃)ₙ²⁺](aq.)+yCO₃²⁻+zH₂O → (Mn₁₋ₓMₓ)CO₃₍ₛ₎+nNH₃²⁺ -- (3)

As suggested in Reaction Formulas 1 to 3, hydrazine retards the rapid reaction of manganese with carbonate anions, thus forming spheric manganese carbonate particles.

Next, an outer shell is layered on the inner core of spheric manganese carbonate obtained in step a) as described in step b).

While the precipitates remain within the reactor, the metal salt and the aqueous alkaline solution are substituted as follows. The metal M' is selected from a group consisting of Mg, Ni, Cu, Zn and combinations thereof and mixed with a Mn salt at a molar ratio of 0.01≤y≤0.5, with M' preferably being different from M. For the substitution, two or more substituting metal salts are preferably used. A metal salt solution, an aqueous ammonia solution, and a carbonate solution are mixed together in a reactor. A preferable concentration ranges from 0.5 to 3 M for the metal solution, a concentration from 0.1 to 0.8 M for the aqueous ammonia solution, and a concentration from 0.5 to 3 M for the carbonate solution in the form of a Na₂CO₃ solution. Along with the aqueous ammonia solution, the Na2CO3 solution is added in order to adjust the pH of the overall reaction in the reactor to within the range from 6.5 to 8. The coprecipitation is conducted for 1 to 10 hours to form a shell layer consisting of a manganese carbonate having the structural formula of Li₁₊ₐ[M'_{y}Mn_{1-y}]₂O₄ (wherein M' is selected from among Ni, Mg, Cu, Zn and combinations thereof, 0.01≤y≤0.5, 0≤a≤0.1).

The carbonate salt may be in the form of Na₂CO₃, NH₄HCO₃ or NH₄CO₃. The thickness of the shell layer depends on the time period for the outer layer precursor.

In step c), the bilayer core/shell complex metal carbonate is washed with distilled water, dried at 110°C for 15 hours, and thermally treated at 500 to 600°C for about 10 hours, and then used as a precursor for a cathode active material.

Afterwards, the bilayer core/shell complex metal carbonate is combined with lithium in a dry manner or a wet manner using a chelating agent such as citric acid, tartaric acid, glycolic acid, maleic acid, etc. The resulting mixture is baked at 700 to 1,100°C for 10 to 25 hours in an air or oxygen atmosphere to give a cathode active material, having a multilayer core-shell structure, for secondary lithium ion batteries.

The carbonate prepared according to the present invention has a tap density of 1.9 g/cm², preferably 2.1 g/cm² or higher, and 2.4 g/cm².

In step d), the transition metal complex bilayer oxide prepared in step c) is combined with a lithium salt, followed by pre-baking at 400 to 650°C for at least 10 hours, sintering at 700 to 1,100°C for 10 to 25 hours, and then annealing at 600 to 700°C for 10 hours. As the lithium salt, lithium hydroxide (LiOH), lithium carbonate (Li₂CO₃), or lithium nitrate (LiNO₃) are used.

Through the preparation method, a layered core-shell cathode active material having the structural formula of Li₁₊ₐ[(MₓMn₁₋ₓ)(M'_{y}Mn_{1-y})_{z}]₂O₄ (M is selected from a group consisting of Ni, Co, Mg, Zn, Ca, Sr, Cu, Zr, P, Fe, Al, Ga, In, Cr, Ge, Sn and combinations thereof, M' is selected from a group consisting of Ni, Mg, Cu, Zn and combinations thereof, M' being different from M, 00.01≤x≤0.25, 0.01≤y≤0.5, 0.01≤z≤0.5, 0≤a≤0.1) is provided for secondary lithium ion batteries.

In the layered cathode active material, the core layer consisting of Li₁₊ₐ[MₓMn₁₋ₓ]₂O₄ (wherein M is selected from a group consisting of Ni, Co, Mg, Zn, Ca, Sr, Cu, Zr, p, Fe, Al, Ga, In, Cr, Ge, Sn and combinations thereof, 00.01≤x≤0.25, 0≤a≤0.1) functions to increase the capacity of the active material while the shell layer, consisting of Li₁₊ₐ[M'_{y}Mn_{1-y}]₂O₄ (M' is selected from a group consisting of Ni, Mg, Cu, Zn and combinations, 0.01≤y≤0.5, 0≤a≤0.1), is electrochemically stable enough to prevent the reaction of the components with electrolytes and the dissolution of transition metals in electrolytes, thereby improving thermal and lifetime characteristics of the active material.

Preferably, the cathode active material ranges in average diameter from 1 to 50 µm, with the shell as thick as 3-50% of the total thickness. Within the diameter range, the active material has high applicability and packing density, leading to an improvement in the capacity and cell efficiency of the secondary batteries. The thickness of the shell layer is limited to up to 50% of the total diameter in order not to decrease the capacity. On the other hand, if the shell has a thickness less than 3% of the total diameter, the lifetime characteristics degrade.

In the present invention, the negative ion-combined composition, Li₁₊ₐ[MₓMn₁₋ₓ]_{1-z}(M_{y}Mn_{1-y})_{z}]₂O_{4-b}P_{b} (P is F or S, 0.1≤b≤0.2) can be obtained in addition to the composition Li₁₊ₐ[MₓMn₁₋ₓ]_{1-z}(M_{y}Mn_{1-y})_{z}]₂O₄. The anions of the bilayer complex cathode active material, except for oxygen, are preferably present in an amount of 20 mol% or less, and more preferably in an amount of 10 mol% or less relative to the amount of oxygen contained. If the anions are contained in an amount more than 20 mol%, the active material decreases in capacity. On the other, if too few anions are used, for example, if the anions are contained in an amount less than 6 mol%, no positive effects can be realized with respect to lifetime and thermal stability.

### Mode for Invention

A better understanding of the present invention may be obtained through the following examples, which are set forth to illustrate, but are not to be construed as the limit of the present invention.

### [EXAMPLE 1]

### 1) Preparation of spheric manganese carbonate

Into a coprecipitation reactor (capacity 4L, equipped with an 80W rotary motor) was poured 4 liters of distilled water, followed by the addition of 80 ml of a 0.32 M hydrazine (H₂NNH₂) solution to the distilled water. Nitrogen gas was supplied at a rate of 1 liter/min to generate bubbles within the reactor, so as to remove dissolved oxygen while the reaction was maintained at 50°C and stirred at 1,000 rpm.

Both a 1 M metal salt solution, in which manganese sulfate was mixed with magnesium sulfate at a 0.95:0.05 molar ratio, and a 0.5M aqueous ammonia solution were fed at a rate of 0.3 L/hr into the reactor. 5 liters of a 2M ammonium hydrogen carbonate (NH₄HCO₃) and 100 ml of a 0.32M hydrazine solution were mixed so as to adjust the pH of the reaction to 7.

An impeller was set to have a speed of 1,000 rpm to allow the solution to stay in the reactor for 6 hours on average. After the reaction reached a steady state, it was maintained thus for a predetermined period of time to yield more dense spheric manganese carbonate.

### 2) Preparation of bilayer core-shell transition metal complex carbonate

After the steady state was reached, the precipitates having the composition (Mn_{0.95}Mg_{0.05})CO₃ thus obtained were coated with a shell having the composition (Mn_{0.75}Ni_{0.25})CO₃. In connection with this, first, the metal solution mixture of manganese sulfate and nickel manganese in a molar ratio of 0.95:0.05, which was supplied in 1), was substituted with a 2M metal solution mixture of manganese sulfate and nickel sulfate in a molar ratio of 0.75:0.25. This new metal solution mixture was fed into the reactor under the same conditions as in 1). Also, a mixture of a 2M sodium carbonate (Na₂CO₃) solution and a 0.2M aqueous ammonium solution was continuously fed at a rate of 0.3 liters/hour, with the metal solution fed at the same rate, in order to adjust the pH of the reaction to within the range from 7 to 7.5.

### 3) Preparation of layered core-shell cathode active material for secondary lithium ion batteries

After being obtained through filtration, the complex transition metal carbonate (MₓMn₁₋ₓ)_{1-z}(M'_{y}Mn_{1-y})_{z}]CO₃ was washed with distilled water and dried for 12 hours at 110°C for 12 hours using a hot blowing drier. Treatment at 500°C for 10 hours in an air atmosphere yielded a metal complex oxide precursor having the composition [(MₓMn₁₋ₓ)_{1-z}(M'_{y}Mn_{1-y})_{z}]₂O₃.

A mixture of the precursor and lithium hydroxide (LiOH) in a molar ratio of 1:1.10 was heated at temperature increasing at a rate of 2°C/min to 450∼550°C, at which it was allowed to stand for 10 hours. After being ground, the mixture was calcined at 800°C for 20 hours to yield a spinel-type cathode active powder of Li₁₊ₐ[(Ni_{0.5}Mn_{1.5})ₓ(Mn_{1.9}Mg_{0.1})₁₋ₓ]₂O₄ in a bilayer core/shell structure, in which the core is composed of Li[Mn_{1.9}Mg_{0.1}]O₄ and covered with a shell of Li[Ni_{0.5}Mn_{1.5}]O₄.

### COMPARATIVE EXAMPLE 1

The same procedure as in Example 1 was conducted, with the exception that the process responsible for the shell layer was omitted, to produce a complex manganese carbonate (Mn_{0.95}Mg_{0.05})CO₃. A mixture of this precursor and lithium hydroxide was calcined at the same temperature as in Example 1 to yield a cathode active material having a composition of Li(Nln_{0.95}Mg_{0.05})₂O₄.

### EXPERIMENTAL EXAMPLE 1: Assay for Cathode Active Material Characteristics

The cathode active materials obtained in Example 1 and Comparative Example 1 were photographed using SEM and XRD.

### (1) SEM

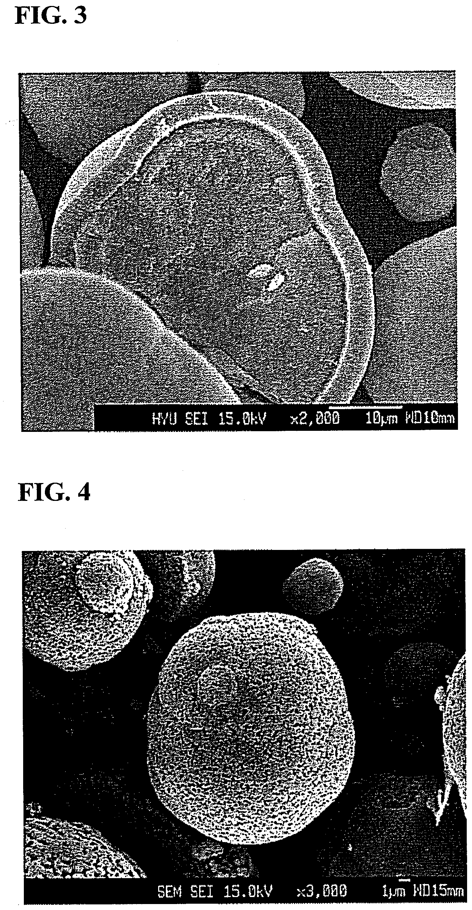

A SEM photograph of the bilayer spinel-type oxide particles obtained in Example 1 is shown in FIG. 4. As seen in this photograph, the particles were found to have a diameter of 30 µm or larger with a narrow particle size distribution, and to be spherical. The bilayer core/shell structure of the particles is apparent from the cross section of the particle as shown in FIG. 3.

### (2) XRD

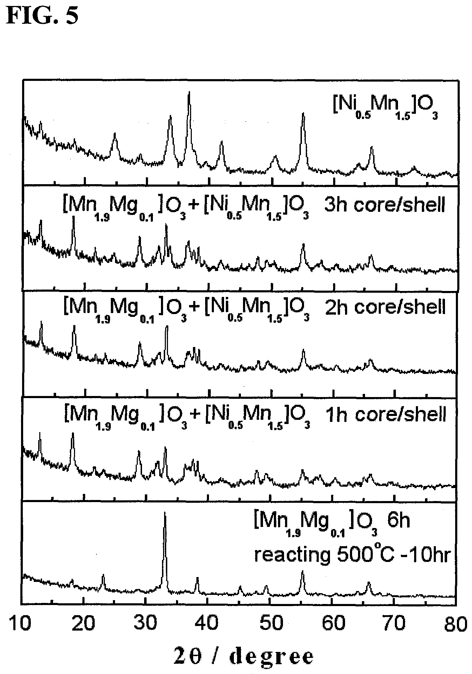

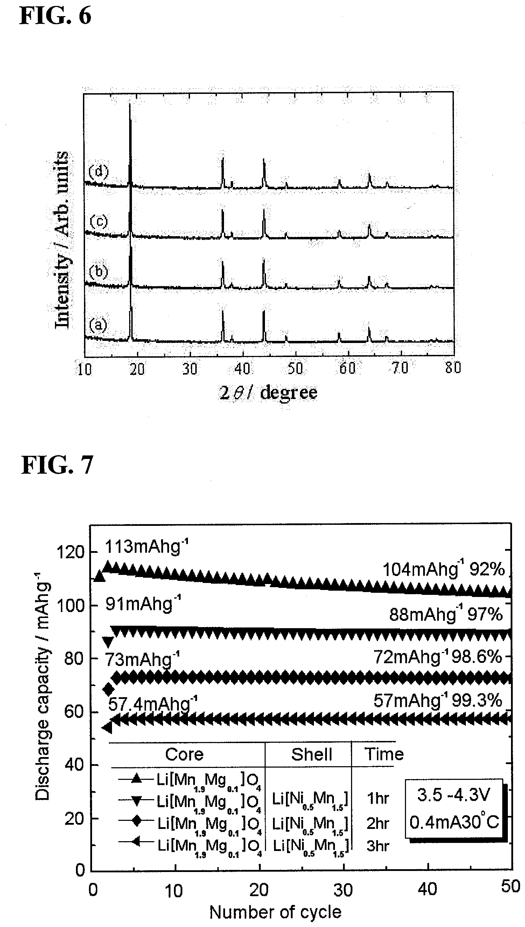

Using an X-ray diffractometer (Model Rint-2000, Rigaku, Japan), the particles were analyzed for X-ray diffraction patterns. XRD diffractograms of the precursor [(Ni_{0.5}Mn_{1.5})ₓ(Mn_{1.9}Mg_{0.1})₁₋ₓ]₂O₃ calcined at 500°C and the cathode active material Li₁₊ₐ[(Ni_{0.5}Mn_{1.5})ₓ(Mn_{1.9}Mg_{0.1})₁₋ₓ]₂O₄ sintered at 800°C are given in FIGS. 5 and 6, respectively. No peaks responsible for impurities were found in the XRD diffractogram of FIG. 6, which demonstrates that the particle has a well-formed cubic spinel structure.

### EXPERIMENTAL EXAMPLE 2: Assay for Battery Characteristics

A battery employing the bilayer cathode active material prepared in Example 1 was evaluated for characteristics using an electrochemical analyzer (Model: Toscat 3000U, Toyo, Japan). In this regard, a charge and discharge experiment was carried out at 30°C and 60°C in a potential range from 3.5 to 4.3 V with a current density of 0.2 mA/cm². A slurry was prepared by mixing the cathode active material powder prepared in Example 1, with the conducting material acetylene black and the binder polyvinylidene fluoride (PVdF) in a weight ratio of 80:10:10. The slurry was uniformly layered on an aluminum foil 20 µm thick, followed by drying at 120°C in a vacuum. In a well-known process, the cathode thus obtained was separated from a lithium foil counter electrode by a porous polyethylene membrane separator (Celgard 2300, 25 µm thick, Celgard LLC), with a 1 M solution of LiPF₆ in a mixture of 1:1 volume of ethylene carbonate and diethyl carbonate serving as an electrolyte, to prepare a coil battery. This was analyzed for battery characteristics with the aid of the electrochemical analyzer (Toscat 3100U, Toyo System).

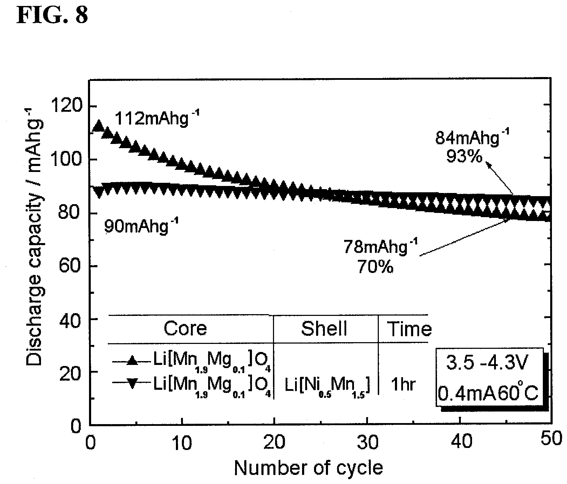

FIGS. 7 and 8 are graphs in which discharge capacity was plotted against lifetime at 30°C and 60°C according to the time period for which the core of the bilayer core/shell structure prepared in Example 1 was coated with the shell. As the time period for the deposition of the electrochemically inert shell was increased, the battery using the spinel oxide decreased in discharge capacity, but increased in lifetime. Specifically, after 50 rounds of a charge and discharge cycle at 60°C, the active material coated with the shell was found to retain as much as 93% of its initial capacity, whereas the discharge capacity of the naked active material was decreased to 70% of its initial capacity.

Taken together, the data from the above examples demonstrate that the second lithium ion battery using the bilayer core/shell cathode active material according to the present invention had superior discharge capacity and as much as 93% of its initial capacity even after 50 rounds of a charge-discharge cycle at temperatures as high as 60°C.

## Claims

1. A method for preparing a spherical cathode active material for secondary lithium batteries comprising a multilayer core-shell structure having a structural formula of: Li₁₊ₐ[(MₓMn₁₋ₓ)_{1-z}(M'_{y}Mn_{1-y})_{z}]₂O₄ (M is a metal selected from a group consisting of Ni, Co, Mg, Zn, Ca, Sr, Cu, Zr, P, Fe, Al, Ga, In, Cr, Ge, Sn and combinations thereof, M' is a metal selected from a group consisting of Ni, Mg, Cu, Zn and combinations thereof, M' is different from M, 0.01≤x≤0.25, 0.01≤y≤0.5, 0.01≤z≤0.5, and 0≤a≤0.1), which is **characterized in that** the method comprises:
a) mixing and stirring distilled water and a hydrazine (H₂NNH₂) solution in a reactor, feeding a metal salt solution containing a Mn salt and a salt of a metal M selected from a group consisting of Ni, Co, Mg, Zn, Ca, Sr, Cu, Zr, P, Fe, Al, Ga, In, Cr, Ge, Sn and combinations thereof, and an aqueous ammonia solution into the reactor, and adding a mixture of a carbonate solution and a hydrazine solution to the reactor, so as to cause a reaction;
b) ceasing the supply of the metal M and Mn, and feeding a metal salt solution containing a Mn salt and a salt of a metal M' selected from a group consisting of Ni, Mg, Cu, Zn and combinations thereof, a carbonate solution and an aqueous ammonia solution into the reactor to cause a reaction for producing a complex transition metal carbonate particle having a composition of [(MₓMn₁₋ₓ)_{1-z}(M'_{y}Mn_{1-y})_{z}]CO₃;
c) filtering, washing and drying the complex transition metal carbonate particle to obtain a precursor having a composition of [(MₓMn₁₋ₓ)_{1-z}(M'_{y}Mn_{1-y})_{z}]₂O₃; and
d) mixing the precursor with a lithium salt selected from a group consisting of lithium hydroxide (LiOH), lithium carbonate (Li₂CO₃), and lithium nitrate (LiNO₃), and heating to a temperature ranging from 400 to 650°C, maintaining the temperature thereat for a predetermined period of time, grinding and calcining the mixture.

2. The method as set forth in claim 1, wherein the step d) is carried out by mixing the precursor and the lithium salt in a molar ratio of 1:1∼1.25, heating the mixture at an increasing rate of 2°C/min to and at 400∼650°C for at least 10 hours, grinding the thermally treated body to produce a powder, and calcining the powder at 700∼1,100°C for 10 to 25 hours.

3. The method as set forth in claim 1, wherein the salt of metal M used in step a) and the salt of metal M' in step b) is in the form of metal sulfate, metal nitrate, or metal phosphate.

4. The method as set forth in claim 1, wherein the carbonate in the carbonate solution used in steps a) and b) is selected from a group consisting of ammonium hydrogen carbonate, sodium carbonate, ammonium carbonate, and sodium hydrogen carbonate.

5. The method as set forth in claim 1, wherein the metal salt solution of step a) contains a salt of a metal M selected from a group consisting of Ni, Co, Mg, Zn, Ca, Sr, Cu, Zr, P, Fe, Al, Ga, In, Cr, Ge, Sn and combinations thereof and a Mn salt in a molar ratio of 0.01∼0.25:0.09∼0.75 and ranges in concentration from 0.5 to 3 M, the aqueous ammonia solution ranges in concentration from 0.1 to 0.8 M, and the aqueous hydrazine (H₂NNH₂) solution is used in an amount from 0.5 to 4 vol% based on the total volume of the distilled water in step a).

6. The method as set forth in claim 1, wherein the metal salt solution of step b) contains a Mn salt and a salt of a metal M' selected from a group consisting of Ni, Mg, Cu, Zn and combinations thereof in a molar ratio of 0.99∼0.5:0.01∼0.5, ranges in concentration from 0.5 to 3M, and is stoichiometrically mixed with a 0.5∼3M carbonate solution and a 0.1∼0.8M aqueous ammonia solution.

7. The method as set forth in claim 1, the multilayer core-shell structure comprises a core having a structural formula of Li₁₊ₐ[MₓMn₁₋ₓ]₂O₄, wherein M is a metal selected from a group consisting of Ni, Co, Mg, Zn, Ca, Sr, Cu, Zr, P, Fe, Al, Ga, In, Cr, Ge, Sn and combinations thereof, 0.01≤x≤0.25, 0≤a≤0.1, and a shell having a structural formula of Li₁₊ₐ[M'_{y}Mn_{1-y}]₂O₄, wherein M' is a metal selected from a group consisting of Ni, Mg, Cu, Zn and combinations, 0.01≤y≤0.5, 0≤a≤0.1.

8. The method as set forth in claim 7, wherein the shell is as thick as 3 to 50% of the total diameter of the cathode active material.

9. The method as set forth in claim 1, wherein the cathode active material has a diameter ranging from 1 to 50 µm.

## Patentansprüche

1. Verfahren zur Herstellung eines kugelförmigen kathodenaktiven Materials für sekundäre Lithiumbatterien umfassend eine mehrschichtige Kern-Schale-Struktur mit einer Strukturformel von: Li₁₊ₐ[(MₓMn₁₋ₓ)_{1-z}(M'_{y}Mn_{1-y})_{z}]₂O₄ (wobei es sich bei M um ein Metall handelt, das aus einer Gruppe bestehend aus Ni, Co, Mg, Zn, Ca, Sr, Cu, Zr, P, Fe, Al, Ga, In, Cr, Ge, Sn und Kombinationen davon ausgewählt ist, wobei es sich bei M' um ein Metall handelt, das aus einer Gruppe bestehend aus Ni, Mg, Cu, Zn und Kombinationen davon ausgewählt ist, wobei M' sich von M unterscheidet, und wobei 0,01 ≤ x ≤ 0,25, 0,01 ≤ y ≤ 0,5, 0,01 ≤ z ≤ 0,5 und 0 ≤ a ≤ 0,1), **dadurch gekennzeichnet, dass** das Verfahren Folgendes umfasst:
a) Mischen und Rühren von destilliertem Wasser und einer Hydrazin (H₂NNH₂) -lösung in einem Reaktor, Zuführen einer Metallsalzlösung, die ein Mn-Salz und ein Salz eines Metalls M enthält, das aus einer Gruppe bestehend aus Ni, Co, Mg, Zn, Ca, Sr, Cu, Zr, P, Fe, Al, Ga, In, Cr, Ge, Sn und Kombinationen davon ausgewählt ist, und einer wässrigen Ammoniaklösung in den Reaktor, und Zugeben eines Gemischs aus einer Carbonatlösung und einer Hydrazinlösung in den Reaktor, um eine Reaktion auszulösen;
b) Unterbrechen der Zufuhr des Metalls M und Mn und Zuführen einer Metallsalzlösung, die ein Mn-Salz und ein Salz eines Metalls M' enthält, das aus einer Gruppe bestehend aus Ni, Mg, Cu, Zn und Kombinationen davon ausgewählt ist, einer Carbonatlösung und einer wässrigen Ammoniaklösung in den Reaktor, um eine Reaktion zur Herstellung eines komplexen Übergangsmetallcarbonatteilchens mit einer Zusammensetzung von [(MₓMn₁₋ₓ)_{1-z}(M'_{y}Mn_{1-y})_{z}]CO₃ zu bewirken;
c) Filtrieren, Waschen und Trocknen des komplexen Übergangsmetallcarbonatteilchens, um eine Vorstufe mit einer Zusammensetzung von [(MₓMn₁₋ₓ)_{1-z}(M'_{y}Mn_{1-y})_{z}]₂O₃ zu erhalten; und
d) Mischen der Vorstufe mit einem Lithiumsalz, das aus einer Gruppe bestehend aus Lithiumhydroxid (LiOH), Lithiumcarbonat (Li₂CO₃) und Lithiumnitrat (LiNO₃) ausgewählt ist, und Erhitzen auf eine Temperatur in einem Bereich von 400 bis 650 °C, wobei die Temperatur für einen vorbestimmten Zeitraum in diesem Bereich aufrecht erhalten wird, Mahlen und Kalzinieren der Mischung.

2. Verfahren nach Anspruch 1, wobei der Schritt d) durchgeführt wird durch Mischen der Vorstufe und des Lithiumsalzes in einem Molverhältnis von 1 : 1 bis 1,25, Erhitzen der Mischung mit einer ansteigenden Geschwindigkeit von 2 °C/min auf 400 bis 650 °C für mindestens 10 Stunden, Mahlen des thermisch behandelten Körpers zur Herstellung eines Pulvers, und Kalzinieren des Pulvers bei 700 bis 1.100 °C für 10 bis 25 Stunden.

3. Verfahren nach Anspruch 1, wobei das in Schritt a) verwendete Salz des Metalls M und das in Schritt b) verwendete Salz des Metalls M' Metallsulfat, Metallnitrat oder Metallphosphat ist.

4. Verfahren nach Anspruch 1, wobei das Carbonat in der in den Schritten a) und b) verwendeten Carbonatlösung aus einer Gruppe bestehend aus Ammoniumhydrogencarbonat, Natriumcarbonat, Ammoniumcarbonat und Natriumhydrogencarbonat ausgewählt ist.

5. Verfahren nach Anspruch 1, wobei die Metallsalzlösung von Schritt a) ein Salz eines Metalls M enthält, das aus einer Gruppe bestehend aus Ni, Co, Mg, Zn, Ca, Sr, Cu, Zr, P, Fe, Al, Ga, In, Cr, Ge, Sn und Kombinationen davon ausgewählt ist, und ein Mn-Salz in einem Molverhältnis von 0,01 bis 0,25 : 0,09 bis 0,75 und in einem Konzentrationsbereich von 0,5 bis 3 M liegt, wobei die wässrige Ammoniaklösung eine Konzentration von 0,1 bis 0,8 M aufweist und die wässrige Hydrazinlösung (H₂NNH₂) in einer Menge von 0,5 bis 4 Vol.-% verwendet wird bezogen auf das Gesamtvolumen des in Schritt a) verwendeten destillierten Wassers.

6. Verfahren nach Anspruch 1, wobei die Metallsalzlösung von Schritt b) ein Mn-Salz und ein Salz eines Metalls M' enthält, das aus einer Gruppe bestehend aus Ni, Mg, Cu, Zn und Kombinationen davon ausgewählt ist, in einem Molverhältnis von 0,99 bis 0,5 : 0,01 bis 0,5, in einer Konzentration zwischen 0,5 und 3 M vorliegt und mit einer 0,5 bis 3 M Carbonatlösung und einer 0,1 bis 0,8 M wässrigen Ammoniaklösung stöchiometrisch gemischt wird.

7. Verfahren nach Anspruch 1, wobei die mehrschichtige Kern-Schale-Struktur Folgendes umfasst: einen Kern mit der Strukturformel von Li₁₊ₐ[MₓMn₁₋ₓ]₂O₄, wobei es sich bei M um ein Metall handelt, das aus der Gruppe bestehend aus Ni, Co, Mg, Zn, Ca, Sr, Cu, Zr, P, Fe, Al, Ga, In, Cr, Ge, Sn und Kombinationen davon ausgewählt ist, wobei 0,01 ≤ x ≤ 0,25, 0 ≤ a ≤ 0,1, und eine Schale mit der Strukturformel von Li₁₊ₐ[_{M}'_{y}Mn_{1-y}]₂O₄, wobei es sich bei M' um ein Metall handelt, das aus der Gruppe bestehend aus Ni, Mg, Cu, Zn und Kombinationen davon ausgewählt ist, wobei 0,01 ≤ y ≤ 0,5, 0 ≤ a ≤ 0,1.

8. Verfahren nach Anspruch 7, wobei die Schale eine Dicke von 3 bis 50 % des Gesamtdurchmessers des aktiven Kathodenmaterials aufweist.

9. Verfahren nach Anspruch 1, wobei das kathodenaktive Material einen Durchmesser aufweist, der in einem Bereich von 1 bis 50 µm liegt.

## Revendications

1. Procédé pour préparer un matériau actif pour cathode sphérique pour piles secondaires au lithium comprenant une structure coeur-enveloppe multicouche ayant une formule structurelle suivante : Li₁₊ₐ[(MₓMn₁₋ₓ)_{1-z}(M'_{y}Mn_{1-y})_{z}]₂O₄ (M est un métal sélectionné dans un groupe constitué de Ni, Co, Mg, Zn, Ca, Sr, Cu, Zr, P, Fe, Al, Ga, In, Cr, Ge, Sn et des combinaisons de ceux-ci, M' est un métal sélectionné dans un groupe constitué de Ni, Mg, Cu, Zn et des combinaisons de ceux-ci, M' est différent de M, 0,01 ≤ x ≤ 0,25, 0,01 ≤ y ≤ 0,5, 0,01 ≤ z ≤ 0,5, et 0 ≤ a ≤ 0,1), qui est **caractérisé en ce que** le procédé comprend :
a) le mélange et l'agitation d'eau distillée et d'une solution d'hydrazine (H₂NNH₂) dans un réacteur, l'introduction d'une solution de sels métalliques contenant un sel de Mn et un sel d'un métal M sélectionné dans un groupe constitué de Ni, Co, Mg, Zn, Ca, Sr, Cu, Zr, P, Fe, Al, Ga, In, Cr, Ge, Sn et des combinaisons de ceux-ci, et d'une solution aqueuse d'ammoniac dans le réacteur, et l'ajout d'un mélange d'une solution de carbonate et d'une solution d'hydrazine au réacteur, afin de provoquer une réaction ;
b) l'arrêt de l'introduction du métal M et de Mn, et l'introduction d'une solution de sels métalliques contenant un sel de Mn et un sel d'un métal M' sélectionné dans un groupe constitué de Ni, Mg, Cu, Zn et des combinaisons de ceux-ci, d'une solution de carbonate et d'une solution aqueuse d'ammoniac dans le réacteur pour provoquer une réaction pour produire une particule de carbonate de métal de transition complexe ayant comme composition [(MₓMn₁₋ₓ)_{1-z}(M'_{y}Mn_{1-y})_{z}]CO₃ ;
c) la filtration, le lavage et le séchage de la particule de carbonate de métal de transition complexe pour obtenir un précurseur ayant comme composition [(MₓMn₁₋ₓ)_{1-z}(M'_{y}Mn_{1-y})_{z}]₂O₃ ; et
d) le mélange du précurseur avec un sel de lithium sélectionné dans un groupe constitué de l'hydroxyde de lithium (LiOH), du carbonate de lithium (Li₂CO₃), et du nitrate de lithium (LiNO₃), et un chauffage à une température allant de 400 à 650 °C, le maintien de la température pendant une période prédéterminée de temps, le broyage et la calcination du mélange.

2. Procédé selon la revendication 1, dans lequel l'étape d) est effectuée par le mélange du précurseur et du sel de lithium à un rapport molaire de 1 : 1 à 1,25, le chauffage du mélange à une vitesse d'augmentation de 2 °C/min jusqu'à et à 400 à 650 °C pendant au moins 10 heures, le broyage du corps thermiquement traité pour produire une poudre, et la calcination de la poudre à 700 à 1 100 °C pendant 10 à 25 heures.

3. Procédé selon la revendication 1, dans lequel le sel de métal M utilisé dans l'étape a) et le sel de métal M' dans l'étape b) sont sous la forme d'un sulfate métallique, d'un nitrate métallique, ou d'un phosphate métallique.

4. Procédé selon la revendication 1, dans lequel le carbonate dans la solution de carbonate utilisée dans les étapes a) et b) est sélectionné dans un groupe constitué de l'hydrogénocarbonate d'ammonium, du carbonate de sodium, du carbonate d'ammonium, et de l'hydrogéno-carbonate de sodium.

5. Procédé selon la revendication 1, dans lequel la solution de sels métalliques de l'étape a) contient un sel d'un métal M sélectionné dans un groupe constitué de Ni, Co, Mg, Zn, Ca, Sr, Cu, Zr, P, Fe, Al, Ga, In, Cr, Ge, Sn et des combinaisons de ceux-ci et un sel de Mn à un rapport molaire de 0,01 à 0,25 : 0,09 à 0,75 et sa concentration va de 0,5 à 3 M, la concentration de la solution aqueuse d'ammoniac est de 0,1 à 0,8 M, et la solution aqueuse d'hydrazine (H₂NNH₂) est utilisée en une quantité de 0,5 à 4 % en volume sur la base du volume total de l'eau distillée dans l'étape a).

6. Procédé selon la revendication 1, dans lequel la solution de sels métalliques de l'étape b) contient un sel de Mn et un sel d'un métal M' sélectionné dans un groupe constitué de Ni, Mg, Cu, Zn et des combinaisons de ceux-ci à un rapport molaire de 0,99 à 0,5 : 0,01 à 0,5, sa concentration va de 0,5 à 3 M, et est mélangée de manière stoechiométrique avec une solution de carbonate à 0,5 à 3 M et une solution aqueuse d'ammoniac à 0,1 à 0,8 M.

7. Procédé selon la revendication 1, la structure coeur-enveloppe multicouche comprend un coeur ayant comme formule structurelle Li₁₊ₐ[MₓMn₁₋ₓ]₂O₄, dans laquelle M est un métal sélectionné dans un groupe constitué de Ni, Co, Mg, Zn, Ca, Sr, Cu, Zr, P, Fe, Al, Ga, In, Cr, Ge, Sn et des combinaisons de ceux-ci, 0,01 ≤ x ≤ 0,25, 0 ≤ a ≤ 0,1, et une enveloppe ayant comme formule structurelle Li₁₊ₐ[M'_{y}Mn_{1-y}]₂O₄, dans laquelle M' est un métal sélectionné dans un groupe constitué de Ni, Mg, Cu, Zn et des combinaisons, 0,01 ≤ y ≤ 0,5, 0 ≤ a ≤ 0,1.

8. Procédé selon la revendication 7, dans lequel l'épaisseur de la enveloppe représente 3 à 50 % du diamètre total du matériau actif pour cathode.

9. Procédé selon la revendication 1, dans lequel le matériau actif pour cathode présente un diamètre allant de 1 à 50 µm.
